# DEMANDE DE BREVET EUROPEEN

(11) **EP 4 725 807 A1**
(43) Date de publication de la demande: **15.04.2026**
(21) Numéro de dépôt: 25207998.3
(22) Date de dépôt: 10.10.2025
(51) Int. Cl.: B62D 25/20

(54) **SOUBASSEMENT POUR VÉHICULE AUTOMOBILE**

(30) Priorité: 14.10.2024 FR 2411058
(71) Demandeur: Renault s.a.s, 92100 Boulogne Billancourt (FR)
(72) Inventeur: DUEZ, Mickael, 78280 GUYANCOURT (FR)

(57) **Abrégé**

L'invention concerne un soubassement de véhicule automobile destiné à délimiter une partie inférieure d'un habitacle du véhicule, ledit soubassement comportant :
- Une paire de longerons latéraux s'étendant selon la direction longitudinale du véhicule ;
- Un plancher, notamment un plancher central, s'étendant transversalement entre les longerons,
- Au moins une traverse de siège de forme allongée disposée sur la face supérieure du plancher et s'étendant transversalement entre les longerons, ladite traverse comportant une portion centrale et deux portions latérales fixées chacune à leur extrémité au longeron correspondant, au moins l'une des deux portions latérales présentant un comportement ductile et étant apte à être déformée de manière plastique en tout ou partie sous l'effet d'un choc latéral d'une énergie supérieure à une valeur prédéterminée.

## Description

### Domaine technique

La présente invention concerne un soubassement pour véhicule automobile et un véhicule automobile équipé d'un tel soubassement.

### Arrière-plan technologique

Le soubassement d'un véhicule automobile, également appelé « structure sous caisse » correspond à la partie portante inférieure de la carrosserie du véhicule.

De manière connue en soi, le soubassement d'un véhicule comporte plusieurs éléments structuraux destinés à assurer à la fois la rigidité du châssis, la protection des occupants. Le soubassement comporte un plancher soutenu par deux longerons longitudinaux disposés de part et d'autre du véhicule, ainsi que des traverses transversales, notamment les traverses d'assise avant et arrière.

Dans le cas des véhicules de type hybride ou électrique, le soubassement supporte également des éléments essentiels pour la propulsion hybride, tels que le bloc batterie haute tension, souvent installé sous le plancher central, entre les sièges avant et arrière.

La sécurisation des composants électriques, tels que les batteries, ainsi que la protection des occupants, constituent un enjeu majeur.

En particulier, lors d'un choc latéral, également désigné sous le terme de « choc poteau », la présence du bloc batterie de propulsion soulève une problématique spécifique. En effet, la déformation de la structure de soubassement pourrait entraîner une déformation des batteries et la détérioration de certaines de leurs cellules, ce qui présente des risques importants, notamment d'électrocution ou de brûlures chimiques pour les passagers.

Il en résulte ainsi un besoin accru d'améliorer les structures de soubassement afin d'assurer une protection optimale des batteries ainsi que de l'habitacle.

### Résumé de l'invention

L'invention vise à répondre à ce besoin et a pour objet un soubassement de véhicule automobile, notamment une partie centrale dudit soubassement, destiné à délimiter une partie inférieure d'un habitacle du véhicule, ledit soubassement comportant :
- Une paire de longerons latéraux s'étendant selon la direction longitudinale du véhicule ;
- Un plancher, notamment un plancher central, s'étendant transversalement entre les longerons,
- Au moins une traverse de siège de forme allongée disposée sur la face supérieure du plancher et s'étendant transversalement entre les longerons, ladite traverse comportant une portion centrale et deux portions latérales fixées chacune à leur extrémité au longeron correspondant, au moins l'une des deux portions latérales présentant un comportement ductile et étant apte à être déformée de manière plastique en tout ou partie sous l'effet d'un choc latéral d'une énergie supérieure à une valeur prédéterminée.

La traverse de siège selon l'invention présente plusieurs avantages essentiels pour la sécurité et la performance du véhicule.

Lors d'un choc latéral, la portion centrale rigide assure une résistance structurelle accrue, contribuant à préserver l'intégrité de l'habitacle et à protéger les occupants, tandis que les portions latérales ductiles se déforment plus facilement pour absorber l'énergie de l'impact et la dissiper progressivement avant qu'elle n'atteigne l'habitacle.

La capacité des portions ductiles à absorber et à dissiper l'énergie permet de diminuer la force transmise aux passagers lors d'un impact latéral. Cette déformation progressive réduit la violence du choc ressenti dans l'habitacle, diminuant ainsi le risque de blessures graves pour les occupants.

En outre, dans les véhicules hybrides ou électriques, la batterie est souvent située sous le plancher, notamment près des sièges, ce qui la rend vulnérable lors d'un choc latéral. La présence des portions latérales précitées permet de protéger la batterie en absorbant une partie de l'énergie du choc avant qu'elle ne parvienne à la zone où est logée la batterie. Cela réduit le risque de dommages à la batterie, évitant les dangers potentiels comme les incendies, les fuites chimiques ou les risques d'électrocution.

De plus, l'incorporation de la ductilité directement dans la structure de la traverse de siège assure une conception compacte du soubassement.

Par « *choc latéral »* ou « *choc poteau* », on entend une collision dans laquelle un véhicule est impacté sur l'un de ses côtés, plutôt que frontalement ou par l'arrière. Ce type d'accident survient généralement lorsque deux véhicules se percutent perpendiculairement, par exemple à une intersection, ou lorsqu'un véhicule entre en collision avec un objet fixe, tel qu'un poteau ou un arbre.

Le « *comportement ductile* » désigne la capacité des portions latérales à se déformer de manière significative avant de rompre, tout en absorbant de l'énergie. Contrairement à une portion fragile, qui se casse soudainement lorsqu'elle est soumise à une contrainte, la portion ayant un comportement ductile subit une déformation plastique progressive sous l'effet de forces extérieures, ce qui lui permet de changer de forme sans se fracturer immédiatement.

La valeur prédéterminée peut être dans la plage de 20 à 30 kJ pour un choc à environ 29 à 32 km/h.

La traverse de siège peut comporter une poutre de forme allongée, notamment en matériau métallique choisi par exemple parmi l'acier ou l'aluminium. La poutre peut présenter une section transversale en forme de U inversé avec une paroi horizontale s'étendant transversalement et deux parois latérales.

La poutre peut présenter une épaisseur constante le long de son axe longitudinal.

La poutre peut présenter une épaisseur variable le long de son axe longitudinal.

De préférence, la poutre comporte la portion centrale et les portions latérales précitées.

Les portions latérales peuvent être symétriques l'une par rapport à l'autre par rapport à un plan médian de la traverse de siège ou de la poutre.

Les portions latérales peuvent présenter une longueur, mesurée le long de l'axe longitudinal de la traverse de siège, identique.

Les portions latérales peuvent présenter chacune une longueur inférieure à 30% de la longueur totale de la traverse de siège.

De préférence, chaque portion latérale est monobloc. De préférence, la traverse de siège est configurée de manière à obtenir un comportement ductile sans nécessiter l'ajout de pièces rapportées. La présente invention s'affranchit de l'utilisation de pièces rapportées sur la traverse de siège en intégrant directement dans la conception de la traverse des caractéristiques structurelles permettant d'atteindre la ductilité recherchée. Cela simplifie la fabrication, réduit le poids et les coûts, tout en garantissant une performance optimale en termes de sécurité et d'absorption d'énergie lors d'un choc latéral.

De préférence, la traverse de siège est dépourvue de pièces rapportées destinées à conférer le comportement ductile. Comme mentionné plus haut, la ductilité est avantageusement intégrée directement dans la structure de la traverse, sans nécessiter de pièces additionnelles ou rapportées.

Les portions latérales peuvent comporter chacune un matériau ductile, de préférence métallique.

Le matériau ductile peut être un acier, notamment choisi parmi les aciers borés à haute résistance (PHS - Press Hardened Steel). Un acier adapté à une telle application peut correspondre à l'acier Ductibor 500 commercialisé par la compagnie ArcelorMittal.

Le matériau ductile peut être de l'aluminium.

Dans des modes de réalisation, la portion centrale et les portions latérales sont constituées de matériaux différents.

La portion centrale peut comporter un matériau métallique tôle, tel que l'acier, notamment un acier de type THLE (très haute limite d'élasticité) ou UHLE (ultra-haute limite d'élasticité). Un acier adapté à une telle application peut correspondre à l'acier Usibor 1500 commercialisé par la compagnie ArcelorMittal.

La traverse de siège, notamment la poutre, est obtenue par assemblage de pièces. Les portions latérales peuvent être reliées chacune à la portion centrale par raboutage, soudage ou vissage, de manière à former ladite traverse de siège.

De préférence, la traverse de siège, notamment la poutre, est monolithique, les portions latérales et la portion centrale venant de matière. Autrement dit, la portion centrale et les portions latérales se présentent avantageusement sous forme d'un bloc d'un seul tenant.

La traverse de siège, notamment la poutre, peut être obtenue par un procédé d'emboutissage, notamment à chaud ou à froid.

Les portions latérales peuvent comporter une pluralité d'ajours réalisés à des emplacements prédéfinis de manière à obtenir ledit comportement ductile. La présence de tels ajours permet de favoriser la déformation dans les portions latérales. Les portions latérales ajourées peuvent ainsi se comporter comme des zones "fusibles" qui se déformeront de manière ductile pour absorber le choc, tandis que la portion centrale reste rigide et assure l'intégrité structurelle.

Les ajours peuvent présenter un contour arrondi, notamment de forme sensiblement circulaire ou ovale. Cela permet d'éviter les concentrations de contraintes aux angles, ce qui améliore la capacité des portions latérales à se déformer progressivement sans se fissurer.

La taille des ajours est de préférence proportionnelle à l'épaisseur et au matériau de la traverse de siège, notamment de la poutre.

Les ajours peuvent être formés par découpe laser, par poinçonnage ou encore par jet d'eau. De préférence, les ajours sont formés par découpe laser.

De préférence, le soubassement comporte deux traverses de siège présentant une ou plusieurs caractéristiques décrites ci-dessus.

Les traverses peuvent être réunies entre elles au niveau de leurs portions centrales, par exemple à mi-longueur, par une barre. Cela permet de rigidifier la zone centrale où se trouvent les batteries. Cela permet de garantir que, même si les portions ductiles se déforment lors d'un impact, la zone centrale reste intacte et continue de protéger les batteries.

L'invention a encore pour objet un véhicule automobile comportant le soubassement selon l'invention.

Le véhicule peut être de type hybride ou électrique.

Le véhicule comporte de préférence un ou plusieurs blocs de batterie, notamment disposés sous le plancher.

### Brève description des figures

La description qui va suivre en regard des dessins annexés, donnés à titre d'exemples non limitatifs, fera bien comprendre en quoi consiste l'invention et comment elle peut être réalisée. Sur les figures annexées :
[fig. 1] la figure 1 est une vue schématique et partielle d'une portion d'un véhicule selon l'invention,
[fig. 2a] et [fig. 2b] les figures 2a et 2b illustrent un soubassement selon l'invention,
[fig. 3a] la figure 3a est une vue de dessus de la partie centrale du soubassement de la figure 2a,
[fig. 3b] la figure 3b est une vue de dessous de la partie centrale de la figure 3a,
[fig. 4a] la [figure 4a] représente isolément, en vue de dessus, les traverses de siège selon l'invention,
[fig. 4b] La figure 4b est un détail de la figure 4a, et
[fig. 4c] La figure 4c est une vue de dessous des traverses de siège de la figure 4a.

### Description de mode(s) de réalisation

Dans les figures, et à moins qu'il n'en soit disposé autrement, les éléments identiques porteront les mêmes signes de référence.

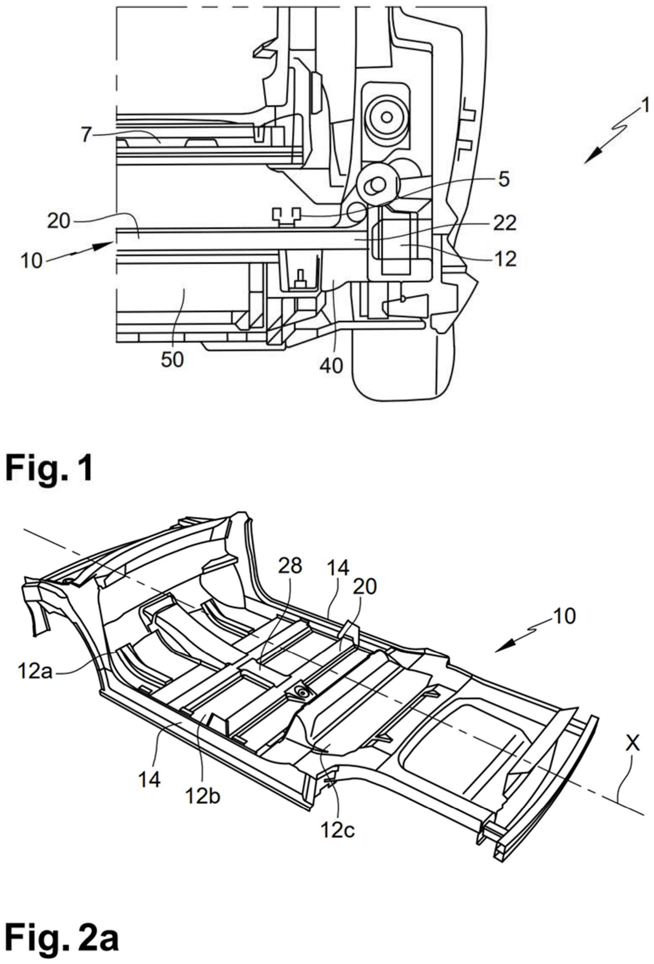

Nous avons représenté à la figure 1 un véhicule automobile 1 selon l'invention. Le véhicule est de type hybride ou électrique et comporte à cet effet un ou plusieurs blocs de batteries de propulsion 50. Le véhicule comporte également une zone d'habitacle 7 agencée pour recevoir les places assises et les occupants du véhicule. Le véhicule 1 comporte en outre un soubassement 10 formant la partie inférieure du véhicule automobile 1.

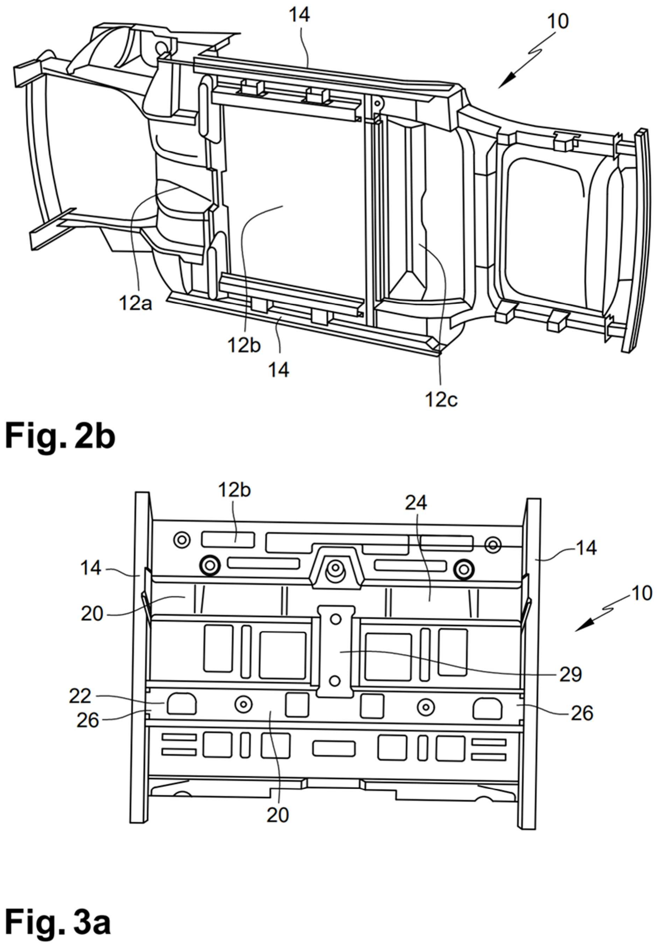

Comme illustré aux figures 2a et 2b, le soubassement 10 comporte trois planchers 12a, 12b et 12c, respectivement avant, central et arrière, qui s'étendent sensiblement suivant la direction longitudinale du véhicule, de l'avant vers l'arrière. Le plancher central 12b est agencé de manière à délimiter la partie inférieure de la zone habitacle 7 du véhicule 1. Le ou les blocs de batterie 50 sont disposés sous le plancher central 12b.

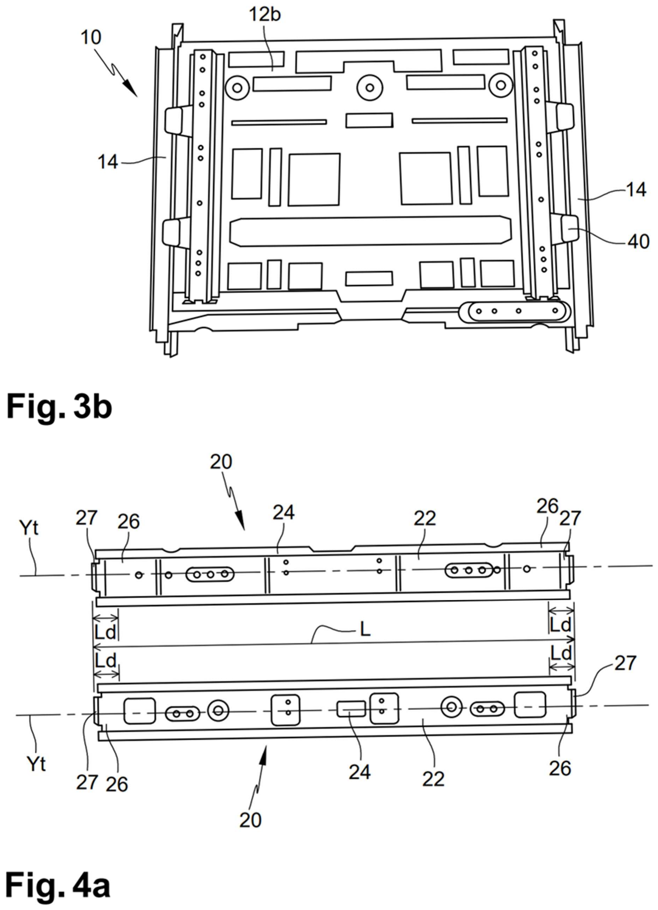

Comme cela est visible sur les figures 3a et 3b, le soubassement 10 comporte une paire de longerons latéraux 14 s'étendant parallèlement à l'axe longitudinal X du véhicule 1, et entre lesquels le plancher central 12b s'étend transversalement.

Le soubassement 10 comporte en outre deux traverses de siège 20 disposées chacune sur la face supérieure du plancher central 12b et s'étendant transversalement entre les longerons latéraux 14. Comme cela est notamment illustré à la figure 1, les deux traverses de siège ont chacune un axe longitudinal Yt perpendiculaire à l'axe longitudinal X du plancher 12b et servent de support pour les glissières 5 des sièges du véhicule 1.

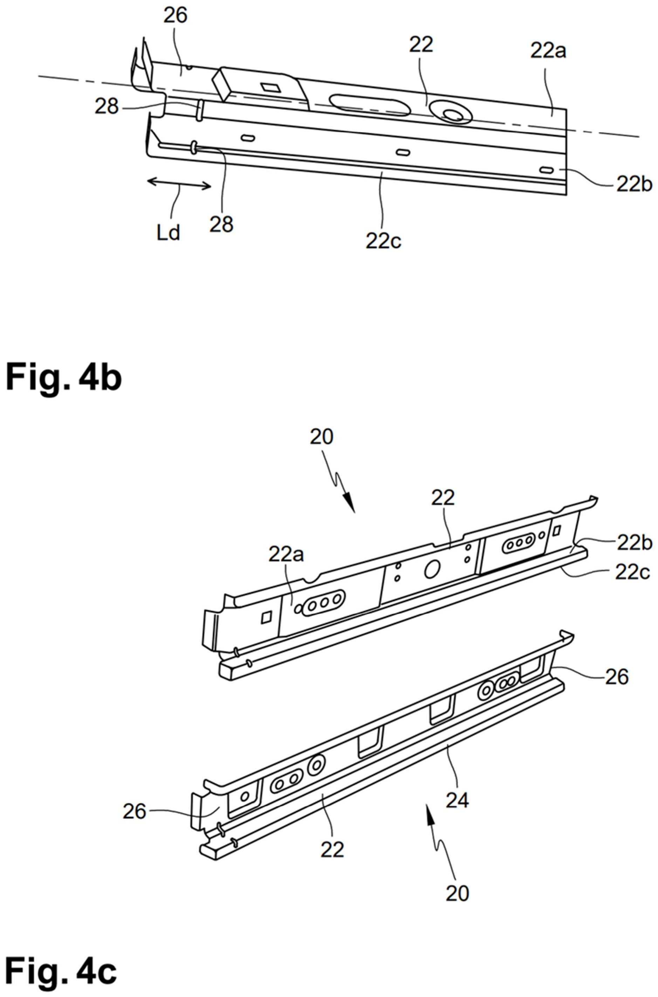

Dans l'exemple illustré, chaque traverse de siège 20 comporte une poutre 22 monolithique de forme allongée en matériau métallique, choisi par exemple parmi l'acier ou l'aluminium. De préférence, la poutre 22 est en acier. Comme cela est visible sur les figures 4a et 4c, la poutre 22 présente une section transversale en forme générale de U inversé avec une paroi horizontale 22a s'étendant transversalement et deux parois latérales 22b prolongées par des ailes 22c. Dans l'exemple illustré, la poutre présente une épaisseur constante le long de son axe longitudinal Yt.

Chaque poutre 22, et donc chaque traverse de siège 20, comporte une portion centrale 24 disposée au-dessus du ou des blocs batterie 50 et deux portions latérales 26 fixées chacune au niveau de leur extrémité 27 au longeron 14 correspondant.

Comme cela est notamment visible sur la figure 4b, chaque portion latérale 26 comporte une pluralité d'ajours 28 réalisés dans la paroi de la poutre 22, par exemple par découpe laser. Les ajours 28 présentent des contours arrondis et sont disposés à des emplacements prédéfinis de manière à obtenir un comportement ductile. Ces ajours 28 facilitent la déformation des portions latérales. Elles fonctionnent comme des zones "fusibles", se déformant de manière ductile pour absorber l'impact, tandis que la portion centrale reste rigide, préservant ainsi l'intégrité structurelle.

Les portions latérales 26 sont ainsi aptes à être déformée de manière plastique en tout ou partie sous l'effet d'un choc latéral d'une énergie supérieure à une valeur prédéterminée.

La valeur prédéterminée peut par exemple être dans la plage de 20 à 30 kJ pour un choc à environ 29 à 32 km/h, pour des tests réalisés en conformité avec les normes de sécurité comme le test de choc latéral Euro NCAP ou FMVSS 214.

Les portions latérales ductiles 26 s'étendent sur une longueur Ld inférieure à 30% de la longueur L de la traverse de siège. Comme cela est visible sur la figure 1, les portions latérales 26 ne s'étendent pas à l'endroit où se trouvent le ou les blocs de batterie 50. En effet, une déformation excessive dans cet endroit pourrait entraîner des risques pour l'intégrité des batteries, voire des incendies.

La portion centrale 24 de la traverse de siège 20 est située au regard du ou des bloc batterie 50. Par sa rigidité, elle garantit que les batteries ne sont pas soumises à des contraintes ou des déformations, ce qui est essentiel pour leur sécurité.

En outre, les portions centrales des deux traverses sont reliées entre elles par une barre permettant de renforcer la protection du ou des blocs batterie en isolant et protégeant les cellules des batteries des impacts.

Le soubassement 10 comporte en outre des crash box 40 en dessous du plancher central 12b entre les longerons 14 et les blocs de batterie 50.

L'invention n'est pas limitée à l'exemple qui vient d'être décrit.

## Revendications

1. Soubassement (10) de véhicule automobile (1) destiné à délimiter une partie inférieure d'un habitacle (7) du véhicule, ledit soubassement (10) comportant :
- Une paire de longerons latéraux (14) s'étendant selon la direction longitudinale du véhicule (X);
- Un plancher (12b), notamment un plancher central, s'étendant transversalement entre les longerons (14),
- Au moins une traverse de siège (20) de forme allongée disposée sur la face supérieure du plancher (12b) et s'étendant transversalement entre les longerons (14), ladite traverse (20) comportant une portion centrale (24) et deux portions latérales (26) fixées chacune à leur extrémité (27) au longeron correspondant, au moins l'une des deux portions latérales (26) présentant un comportement ductile et étant apte à être déformée de manière plastique en tout ou partie sous l'effet d'un choc latéral d'une énergie supérieure à une valeur prédéterminée.

2. Soubassement selon la revendication précédente, les portions latérales (26) présentant chacune une longueur (Ld) inférieure à 30% de la longueur totale (L) de la traverse de siège.

3. Soubassement selon la revendication 1 ou 2, la ou les portions latérales (26) comportant un matériau ductile de préférence métallique, par exemple en acier ou en aluminium.

4. Soubassement selon l'une quelconque des revendications précédentes, la portion centrale (24) et les portions latérales (26) étant constituées de matériaux différents.

5. Soubassement selon la revendication précédente, la traverse de siège (20) étant obtenue par assemblage de pièces, les portions latérales (26) étant reliées chacune à la portion centrale (24) par raboutage, soudage ou vissage, de manière à former ladite traverse de siège (20).

6. Soubassement selon l'une des revendications 1 à 4, la traverse de siège (20) étant monolithique, les portions latérales (26) et la portion centrale (24) venant de matière.

7. Soubassement selon la revendication précédente, la traverse de siège (20) étant obtenue par emboutissage.

8. Soubassement selon la revendication 5 ou 6, les portions latérales (26) comportant une pluralité d'ajours (27) réalisés à des emplacements prédéfinis de manière à obtenir ledit comportement ductile, notamment formés par découpe, les ajours présentant de préférence un contour arrondi.

9. Soubassement selon l'une quelconque des revendications précédentes, le soubassement (10) comportant deux traverses de sièges (20), de préférence, les traverses de siège étant réunies entre elles au niveau de leurs portions centrales (24), par exemple à mi-longueur, par une barre (29).

10. Véhicule automobile (1), notamment de type hybride ou électrique, comportant le soubassement (10) selon l'une quelconque des revendications précédentes, et un ou plusieurs blocs de batterie (50) disposés sous le plancher (12b).
